# EUROPÄISCHE PATENTSCHRIFT

(11) **EP 4 246 080 B1**
(45) Veröffentlichungstag und Bekanntmachung des Hinweises auf die Patenterteilung: **19.03.2025**
(21) Anmeldenummer: 23154226.7
(22) Anmeldetag: 31.01.2023
(51) Int. Cl.: F28D 20/00

(54) **SCHICHTSPEICHER FÜR EINE WÄRMETRÄGERFLÜSSIGKEIT FÜR EINE HEIZ- UND/ODER KÜHLANLAGE**
STRATIFIED STORAGE DEVICE FOR A HEAT TRANSFER FLUID FOR A HEATING AND/OR COOLING SYSTEM
ACCUMULATEUR STRATIFIÉ POUR LIQUIDE CALOPORTEUR POUR UNE INSTALLATION DE CHAUFFAGE ET/OU DE REFROIDISSEMENT

(30) Priorität: 15.03.2022 AT 672022
(43) Veröffentlichungstag der Anmeldung: 20.09.2023
(73) Patentinhaber: Zortea Gebäudetechnik GmbH, 6845 Hohenems (AT)
(72) Erfinder: Zortea-Soshko, Christian Rembert, 6845 Hohenems (AT)
(74) Vertreter: Torggler & Hofmann Patentanwälte - Rankweil

(56) Entgegenhaltungen:
- EP-A1- 0 154 791
- EP-A1- 2 163 745
- EP-A1- 2 765 364
- JP-A- 2004 173 897
- JP-A- 2004 224 153
- US-A1- 2003 006 239

## Beschreibung

Die vorliegende Erfindung betrifft einen Schichtspeicher für eine Wärmeträgerflüssigkeit für eine Heiz- und/oder Kühlanlage mit den Merkmalen des Oberbegriffs des Anspruchs 1.

Derartige Schichtspeicher weisen auf:
- zumindest eine Anschlusskammer, die zumindest einen Anschluss zum Anschließen einer Leitung zum Zu- und/oder Abführen von Wärmeträgerflüssigkeit in den und/oder aus dem Schichtspeicher aufweist,
- zumindest eine Pufferkammer, welche unter und/oder über der zumindest einen Anschlusskammer angeordnet ist,
- zumindest ein erstes Barriereelement mit einer ersten, peripher angeordneten Öffnung und
- zumindest ein zweites Barriereelement mit zumindest einer zweiten Öffnung, welches zwischen dem zumindest einen ersten Barriereelement und der zumindest einen Pufferkammer angeordnet ist,
wobei über die erste Öffnung und die zumindest eine zweite Öffnung eine Fluidverbindung zwischen der zumindest einen Anschlusskammer und der zumindest einen Pufferkammer besteht Ein solcher Schichtspeicher ist beispielsweise in der EP 2481991 A2 offenbart. Ein weiterer Wärmespeicher der die Merkmale des Oberbegriffs von Anspruch 1 zeigt ist in der EP 2 163 745 A1 offenbart.

In der zumindest einen Anschlusskammer soll eine möglichst gute Durchmischung und somit eine möglichst homogene Temperatur herrschen. Im Gegensatz dazu ist in der zumindest einen Pufferkammer eine Durchmischung nicht gewünscht. Vielmehr soll die Wärmeträgerflüssigkeit höher in der zumindest einen Pufferkammer gespeichert sein, wenn sie wärmer ist, und dementsprechend tiefer in der zumindest einen Pufferkammer liegen, wenn sie kälter ist.

Anders ausgedrückt soll die Temperatur in der zumindest einen Pufferkammer in jeder Schicht konstant sein und höher sein, je höher die Schicht liegt.

Um die Turbulenzen in der zumindest einen Anschlusskammer von der zumindest einen Pufferkammer zu entkoppeln, schlägt die EP 2481991 A2 eine Verbindung über einen Spaltraum vor, womit in der Praxis sehr gute Ergebnisse erzielt werden. Allerdings ist die geschichtete Temperaturverteilung in der zumindest einen Pufferkammer dabei noch nicht ideal.

Die Aufgabe der Erfindung besteht darin, einen Schichtspeicher bereitzustellen, der eine verbesserte geschichtete Temperaturverteilung und/oder einen geringeren hydraulischen Widerstand durch die Barriereelemente bietet.

Die DE 102007009199 A1 ist ein weiteres Beispiel aus dem Stand der Technik, wobei allerdings dedizierte Temperaturzonen offenbart werden.

Diese Aufgabe wird durch die Merkmale des Anspruchs 1 gelöst, nämlich indem die zumindest eine zweite Öffnung im zweiten Barriereelement in Bezug auf die Pufferkammer zentral angeordnet ist.

Die zumindest eine zentral angeordnete zweite Öffnung ist an und für sich gegenintuitiv, weil Verwirbelungen aus der zumindest einen Anschlusskammer dadurch leichter in die zumindest eine Pufferkammer gelangen können. Untersuchungen der Anmelderin haben aber überraschenderweise ergeben, dass das zumindest eine erste Barriereelement mit der peripheren ersten Öffnung alleine schon dazu in der Lage ist, diese Verwirbelungen zurückzuhalten, sodass sich ein laminarer Strom durch die zumindest eine zweite Öffnung ergibt.

Dadurch dass die zumindest eine zweite Öffnung in Bezug auf die zumindest eine Pufferkammer zentral angeordnet ist, wird außerdem die geschichtete Temperaturverteilung in der zumindest einen Pufferkammer so wenig wie möglich gestört, weil kein räumliches Ungleichgewicht in der Temperaturverteilung verursacht wird, wenn Wärmeträgerflüssigkeit durch die zumindest eine zweite Öffnung strömt.

Eine andere Problematik ergibt sich potenziell, wenn große Volumenströme in den Schichtspeicher geleitet werden und/oder aus demselben entnommen werden. Ein weiterer Vorteil der Erfindung ist, dass der hydraulische Widerstand zum Überströmen zwischen der zumindest einen Anschlusskammer und der zumindest einen Pufferkammer im Vergleich zum Stand der Technik nicht erhöht werden muss.

Mit der Erfindung ist daher eine verbesserte geschichtete Temperaturverteilung ohne eine Erhöhung des erwähnten hydraulischen Widerstands möglich.

In bevorzugten Ausführungsbeispielen können Anschlüsse ausschließlich in der zumindest einen Anschlusskammer vorhanden sein, sodass die zumindest eine Pufferkammer frei von Anschlüssen ist. Es ist aber prinzipiell auch denkbar, in der zumindest einen Pufferkammer Anschlüsse vorzusehen.

Darunter dass die erste Öffnung peripher angeordnet ist, kann verstanden werden, dass sie im Wesentlichen am Rand der zumindest einen ersten Anschlusskammer angeordnet ist, weil hier tendenziell weniger Verwirbelungen auftreten.

Erfindungsgemäß ist das zumindest eine zweite Barriereelement zwischen dem zumindest einen ersten Barriereelement und der zumindest einen Pufferkammer angeordnet. Das heißt insbesondere, dass die Wärmeträgerflüssigkeit von der zumindest einen Anschlusskammer über die erste Öffnung in einen Raum zwischen dem zumindest einen ersten Barriereelement und dem zumindest einen zweiten Barriereelement gelangen kann sowie von dort über die zumindest eine zweite Öffnung in die zumindest eine Pufferkammer gelangen kann (oder umgekehrt von der zumindest einen Pufferkammer in die zumindest eine Anschlusskammer). Auf diese Weise ist die zumindest eine Anschlusskammer mit der zumindest einen Pufferkammer in Fluidverbindung.

Die zumindest eine Anschlusskammer und/oder die zumindest eine Pufferkammer kann bevorzugt im Wesentlichen symmetrisch in Bezug auf eine vertikale Achse ausgeführt sein.

In bevorzugten Ausführungsformen können vorgesehen sein:
- eine erste Anschlusskammer (relativ hohe Temperatur),
- eine darunter liegende Pufferkammer (Schichtspeicher im engeren Sinn) und
- eine unter der Pufferkammer liegende zweite Anschlusskammer (relativ niedrige Temperatur)

Dabei können zwischen den Anschlusskammern und der Pufferkammer jeweils eine erstes Barriereelement und ein zweites Barriereelement angeordnet sein, wobei das zweite Barriereelement zwischen dem ersten Barriereelement und der Pufferkammer angeordnet sein kann.

Bei anderen bevorzugten Ausführungsformen sind mehrere Pufferkammern in analoger Weise vorgesehen, beispielsweise zwei übereinander angeordnete Pufferkammer, die vorzugsweise durch eine Anschlusskammer und zwei entsprechende Paare an Barriereelementen voneinander getrennt sind. An die Pufferkammern können sich dann wieder Anschlusskammern anschließen usw.

Alternativ oder zusätzlich können dabei alle Anschlüsse für Wärmeträgerflüssigkeit mit kälterer Temperatur an der zweiten Anschlusskammer sein und alle Anschlüsse für Wärmeträgerflüssigkeit mit wärmerer Temperatur an der ersten Anschlusskammer.

Die zumindest eine Anschlusskammer und die zumindest eine Pufferkammer können im selben Behälter angeordnet sein und durch das zumindest eine erste Barriereelement und das zumindest eine zweite Barriereelement voneinander getrennt sein.

Die zumindest eine Anschlusskammer und/oder die zumindest eine Pufferkammer und/oder der gemeinsame Behälter kann isoliert sein, um Wärmeverluste zu minimieren.

Das zumindest eine erste Barriereelement und/oder das zumindest eine zweite Barriereelement kann ein Blech sein.

Die erste Öffnung und/oder die zumindest eine zweite Öffnung kann dabei als Blechschnitt erzeugt werden.

Als Wärmeträgerflüssigkeit kann bevorzugt Wasser eingesetzt werden, wobei gegebenenfalls Zusätze vorhanden sein können.

Schutz wird außerdem für eine Heiz- und/oder Kühlanlage mit einem erfindungsgemäßen Schichtspeicher begehrt.

Vorteilhafte Weiterbildungen der Erfindung sind in den abhängigen Ansprüchen definiert.

Es kann bevorzugt vorgesehen sein, dass die erste Öffnung bis an eine Wandung des Schichtspeichers, insbesondere der zumindest einen Anschlusskammer, reicht.

Wie bereits erwähnt, kann die erste Öffnung auch in einem gewissen Abstand (bevorzugt nicht mehr als zwei Mal eine Dicke der ersten Öffnung, besonders bevorzugt nicht mehr als eine Dicke der ersten Öffnung) zur Wandung der zumindest einen Anschlusskammer liegen.

Es kann bevorzugt genau eine erste Öffnung im zumindest einen ersten Barriereelement geben, wobei mehr als eine erste Öffnung prinzipiell denkbar sind.

In besonders bevorzugten Ausführungsbeispielen kann die erste Öffnung so angeordnet sein, dass in einer Draufsicht auf das zumindest eine erste Barriereelement und das zumindest eine zweite Barriereelement ein Abstand zwischen der ersten Öffnung und der zumindest einen zweiten Öffnung besteht, d.h. insbesondere kein Überlapp zwischen der ersten Öffnung und der zumindest einen zweiten Öffnung vorliegt.

Die erste Öffnung kann in Form eines Kreisringsegments ausgebildet sein.

Die erste Öffnung, insbesondere das Kreisringsegment, kann dabei einen Winkel zwischen 60° und 110°, bevorzugt zwischen 70° und 100° und besonders bevorzugt zwischen 80° und 90°, aufspannen. Das heißt, bevorzugt kann die erste Öffnung nicht vollumfänglich um die Peripherie herum vorhanden sein, sondern sich nur über den angegebenen Winkelbereich erstrecken.

Eine Dicke der ersten Öffnung kann im Wesentlichen einem Abstand zwischen dem zumindest einen ersten Barriereelement und dem zumindest einen zweiten Barriereelement entsprechen.

Die Dicke der ersten Öffnung kann zwischen 5 % und 30 %, bevorzugt zwischen 10 % und 25% und besonders bevorzugt zwischen 15 % und 20 %, eines Radius der zumindest einen Anschlusskammer betragen.

Es können eine Vielzahl von zweiten Öffnungen vorgesehen sein, die im Zentrum des zumindest einen zweiten Barriereelements angeordnet sein können.

Die zweiten Öffnungen können dabei in Form eines Lochblechs vorhanden sein.

Bevorzugt können die zweiten Öffnungen dabei jeweils kreisrund sein oder andere Formen aufweisen.

Das zumindest eine zweite Barriereelement kann einen peripheren undurchlässigen Teil und einen zentralen, zumindest teilweise durchlässigen Teil aufweisen, in welchem die zumindest eine zweite Öffnung angeordnet ist.

Ein Verhältnis einer Fläche zwischen dem durchlässigen Teil und dem undurchlässigen Teil kann zwischen 60 % und 90 %, bevorzugt zwischen 70 % und 85 % und besonders bevorzugt zwischen 75 % und 85 %, betragen. Bevorzugt kann das Verhältnis 80 % betragen.

Ein Verhältnis einer Fläche der zumindest einen zweiten Öffnung zu einer Fläche des zumindest teilweise durchlässigen Bereichs kann zwischen 10 % und 80 %, bevorzugt zwischen 20 % und 60 % und besonders bevorzugt zwischen 30 % und 40 %, liegen.

Der Schichtspeicher und/oder die zumindest eine Anschlusskammer und/oder die zumindest eine Pufferkammer kann eine im Wesentlichen zylindrische Grundform haben. Bevorzugt kann dabei eine kreiszylindrische Grundform sein, wobei allgemeine zylindrische Grundformen durchaus denkbar sind.

Die im Wesentlichen zylindrische Grundform kann selbstverständlich modifiziert sein, beispielsweise mit abgerundeten Kanten und/oder mit Anschlüssen.

Das zumindest eine erste Barriereelement und/oder das zumindest eine zweite Barriereelement kann eine im Wesentlichen kreisförmige Grundform haben. Selbstverständlich sind über die kreisförmige Grundform hinaus erfindungsgemäß die erste Öffnung und die zumindest eine zweite Öffnung im zumindest einen ersten Barriereelement beziehungsweise im zumindest einen zweiten Barriereelement vorhanden.

Ein Verwirbelungselement, vorzugsweise in Form eines zylindrischen Lochblechs, kann in der zumindest einen Anschlusskammer im Wesentlichen mittig angeordnet sein.

Der zumindest eine Anschluss - vorzugsweise alle Anschlüsse - können ein Rohrelement aufweisen, welches in ein Inneres der zumindest einen Anschlusskammer hineinragt.

Eine Länge des Rohrelements kann größer sein als eine Dicke der ersten Öffnung. Anders ausgedrückt, kann das Rohrelement über die erste Öffnung hinausragen, sodass durch Volumenströme an den Anschlüssen so wenig wie möglich Verwirbelungen am Rand der zumindest einen Anschlusskammer, insbesondere am Ort der ersten Öffnung, entstehen.

Weitere Vorteile und Einzelheiten ergeben sich aus den Figuren sowie der dazugehörigen Figurenbeschreibung. Dabei zeigen:
- Fig. 1a bis 1c: ein erfindungsgemäßes Ausführungsbeispiel in drei Ansichten,
- Fig. 2a, 2b: Ausführungsbeispiele erster Barriereelemente,
- Fig. 3a, 3b: Ausführungsbeispiele zweiter Barriereelemente,
- Fig. 4: eine beispielhafte Einbindung eines Schichtspeichers in eine Heiz- und/oder Kühlanlage sowie
- Fig. 5a bis 5d: Simulationsergebnisse zur Erfindung.

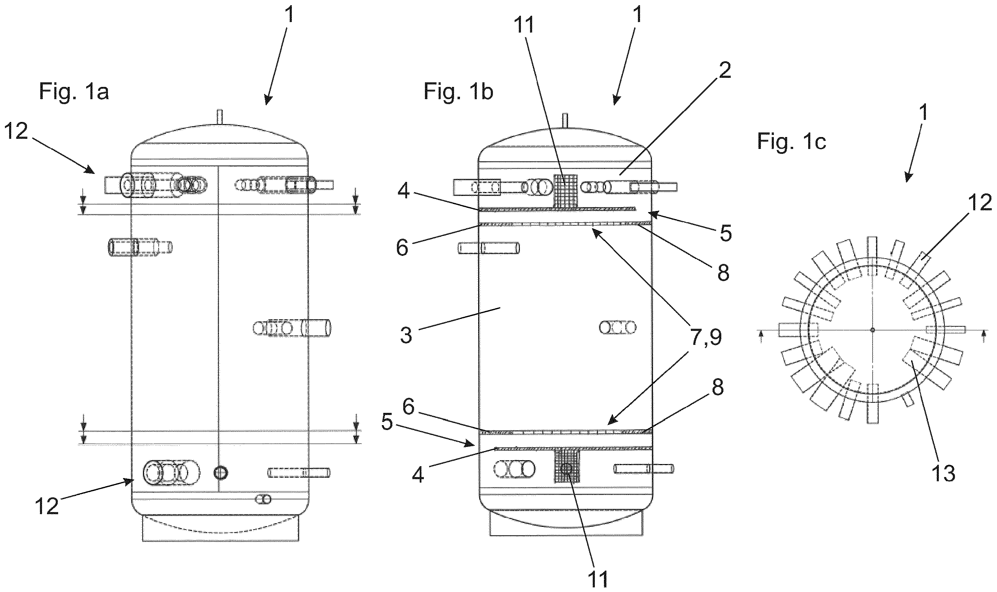

Fig. 1a zeigt einen erfindungsgemäßen Schichtspeicher 1 in einer Seitenansicht.

Von außen erkennbar sind Anschlüsse 12, die in nachfolgend erwähnten Anschlusskammern 2 münden.

In diesem Ausführungsbeispiel sind die nachfolgend beschriebenen Anschlusskammern 2 und die Pufferkammer 3 in einem gemeinsamen Behälter angeordnet, in welchem auch die Barriereelemente 4, 6 angeordnet sind.

Deren ungefähre Position ist in Fig. 1a durch horizontale Striche angedeutet. Genauer sind sie in der Schnittdarstellung aus Fig. 1b zu erkennen.

Die Barriereelemente 4, 6 teilen den gemeinsamen Behälter in eine erste Anschlusskammer 2, welche im oberen Teil des Behälters liegt, in eine Pufferkammer 3 im mittleren Teil des Behälters und einen zweite Anschlusskammer 2 im unteren Teil des Behälters.

Konkret sind zwischen der ersten Anschlusskammer 2 und der Pufferkammer 3 ein erstes Barriereelement 4 und ein zweites Barriereelement 5 vorgesehen.

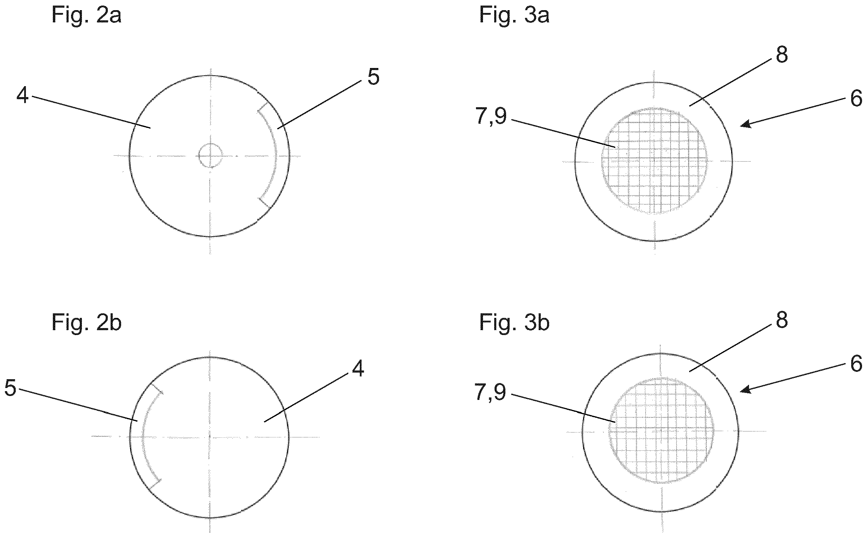

Das erste Barriereelement 4 weist eine erste Öffnung 5 auf, die in diesem Ausführungsbeispiel bis an die Behälterwand heranreicht. Diesbezüglich ist auch auf die Fig. 2a zu verweisen, welche dieses Barriereelement 4 in einer Darstellung von oben zeigt.

Das zweite Barriereelement 6 weist eine Vielzahl von zweiten Öffnungen 7 auf, die zentral in einem teilweise durchlässigen Bereich 9 liegen. Der teilweise durchlässige Bereich ist in diesem Ausführungsbeispiel einfach als Lochblech ausgebildet.

Zwischen der Pufferkammer 3 und der zweiten Anschlusskammer 2 im unteren Teil des Behälters sind außerdem ein erstes Barriereelement 4 und ein zweites Barriereelement 6 in gespiegelter Form angeordnet.

Der Schichtspeicher 1 gemäß diesem Ausführungsbeispiel funktioniert dadurch praktisch vollkommen symmetrisch bezüglich der oberen, ersten Anschlusskammer 2 für Warmwasser und der unteren zweiten Anschlusskammer 2 für Kaltwasser.

In den Anschlusskammern 2 ist darüber hinaus jeweils ein Verwirbelungselement 11 vorhanden.

Tritt beispielsweise ein gewisser erhöhter Volumenstrom durch einen der Anschlüsse 12 in der oberen, ersten Anschlusskammer sorgt zunächst das Verwirbelungselement 11 dafür, dass eine Durchmischung mit der restlichen Flüssigkeit in der Anschlusskammer 2 stattfindet. Es herrscht dadurch eine relativ homogene Temperatur in der oberen, ersten Anschlusskammer 2.

In weiterer Folge tritt ein gewisser Volumenstrom durch die erste Öffnung 5 im ersten Barriereelement 4. Da sich die erste Öffnung im peripheren Teil, d.h. am Rand, der oberen, ersten Anschlusskammer befindet, ist dieser Volumenstrom aber nur wenig turbulent, auch deshalb, weil die erste Öffnung 5 so weit wie möglich vom Verwirbelungselement 11 entfernt ist.

Der Volumenstrom wird als nächstes aus dem Zwischenraum zwischen dem ersten Barriereelement 4 und dem zweiten Barriereelement 6 durch die zweiten Öffnungen in die Pufferkammer 3 gelangen.

Da die zweiten Öffnungen zentral angeordnet sind, wird der Volumenstrom annähernd mit der gleichen Symmetrie in die Pufferkammer 3 gelangen, welche die Pufferkammer 3 ohnehin besitzt.

Dadurch wird die geschichtete Temperaturverteilung in der Pufferkammer 3 so wenig wie möglich gestört. Gleichzeitig erlauben die erste Öffnung und die zweiten Öffnungen gemeinsam, dass der hindurchtretende Volumenstrom im Vergleich zum Stand der Technik recht hoch sein kann, ohne dass die Schichtstruktur in der Pufferkammer 3 zusammenbricht.

Die hier beschriebene Funktionsweise in diesem Ausführungsbeispiel ist analog für Volumenströme, die aus der oberen, ersten Anschlusskammer 2 entnommen werden, oder die in oder aus der unteren zweiten Anschlusskammer 2 für kälteres Wasser eingeleitet oder entnommen werden.

In besonders bevorzugten Ausführungsbeispielen bleibt die Menge der Wärmeträgerflüssigkeit im Schichtspeicher 1 konstant, d.h. die eintretenden und austretenden Volumenströme halten sich im Wesentlichen die Waage.

Fig. 1c zeigt das Ausführungsbeispiel aus den Figuren 1a und 1b in einer Sicht von oben, wobei Rohrelemente 13 strichliert angedeutet sind (siehe auch Fig. 1b), welche die Anschlüsse 12 in die Anschlusskammer 2 hinein verlängern.

Die ein- und austretenden Volumenströme strömen dadurch nicht am Rand des Schichtspeichers 1 vorbei, sodass Verwirbelungen so weit wie möglich von der ersten Öffnung 5 weggehalten werden.

Wie bereits erwähnt, zeigen Fig. 2a und 3a das erste Barriereelement 4 beziehungsweise das zweite Barriereelement 6 zwischen der oberen, ersten Anschlusskammer 2 und der Pufferkammer 3.

In analoger Weise zeigen die Fig. 2b und 3b das erste Barriereelement 4 beziehungsweise das zweite Barriereelement 6 zwischen der unteren, zweiten Anschlusskammer 2 und der Pufferkammer 3.

Zu erkennen ist, dass die erste Öffnung 5 im oberen ersten Barriereelement 4 im Vergleich zu jenem im der unteren ersten Barriereelement 4 auf der anderen Seite angeordnet wurde.

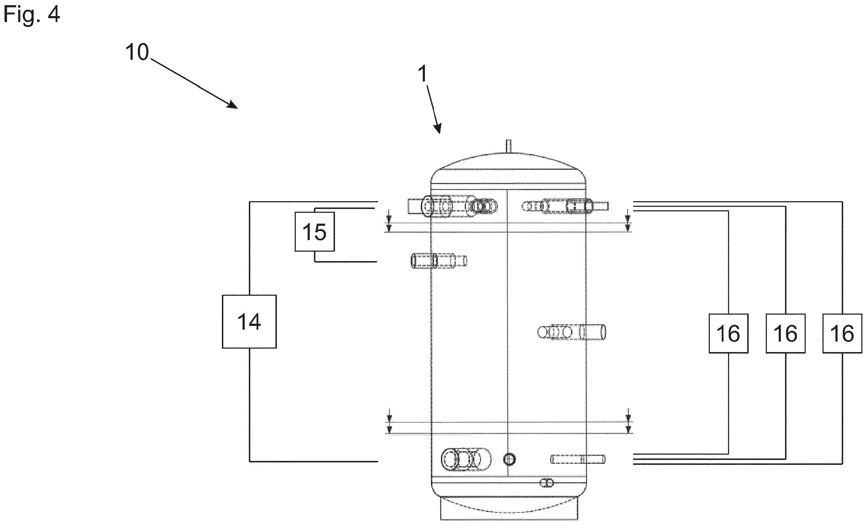

Fig. 4 zeigt ein Ausführungsbeispiel einer Heiz- und/oder Kühlanlage 10 mit einem erfindungsgemäßen Schichtspeicher 1.

Beispielsweise kann eine Wärmepumpe 14 vorgesehen sein, die kältere Wärmeträgerflüssigkeit von einer unteren Anschlusskammer 2 entnimmt und wärmere Wärmeträgerflüssigkeit in eine obere Anschlusskammer 2 liefert.

Beispielsweise kann ein Brennwertkessel 15 vorhanden sein, welcher Wärmeträgerflüssigkeit beispielsweise aus einer Pufferkammer 3 entnimmt und wärmere Wärmeträgerflüssigkeit in eine obere Anschlusskammer 2 liefert.

Auf der Verbraucherseite können beispielsweise Heizungen, insbesondere Fußbodenheizungen 16, vorgesehen sein.

Zu bemerken ist, dass die Anschlüsse der hier beschriebenen Lieferanten für warme Wärmeträgerflüssigkeit und die Verbraucher in Fig. 4 rein schematisch eingezeichnet sind.

Es sei außerdem angemerkt, dass die beschriebenen Lieferanten und Verbraucher rein beispielhaft angeführt sind. Das gilt sowohl für die Art der Lieferanten und Verbraucher als auch für die Anzahl derselben.

Beispielsweise können mehr als eine Wärmepumpe 14 und/oder mehr als ein Brennwertkessel 15 vorgesehen sein.

Beispielsweise können andere Verbraucher als Fußbodenheizungen 16 vorgesehen sein, die natürlich auch in der Anzahl variieren können (d.h. es müssen natürlich nicht genau drei sein).

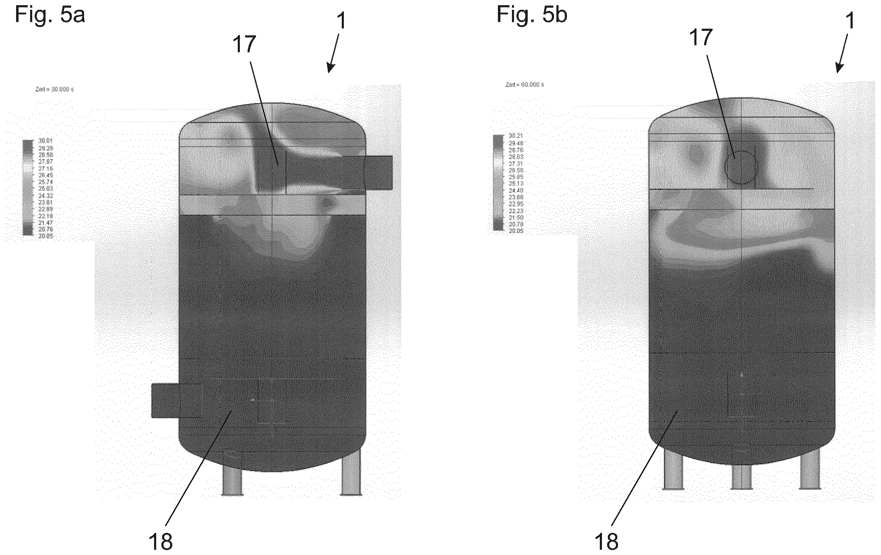

In den Figuren 5a bis 5d sind Simulationsergebnisse zur Erfindung dargestellt. Konkret wurden für das Ausführungsbeispiel gemäß Fig. 1 ein Volumenstrom mit warmer Wärmeträgerflüssigkeit in den Schichtspeicher 1 hinein und zwar durch einen entsprechenden Anschluss in der oberen, ersten Anschlusskammer 2.

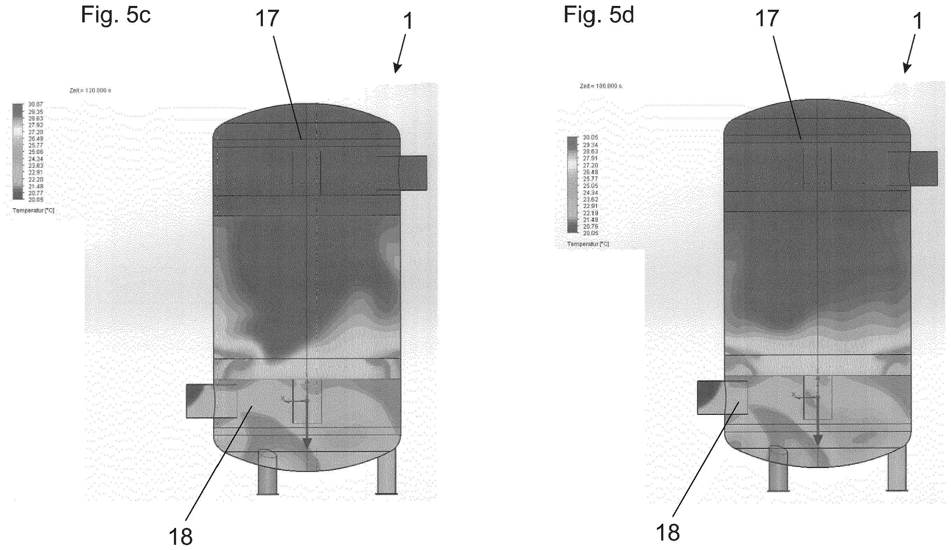

Die Figuren 5a bis 5d bilden das Simulationsergebnis zu verschiedenen Zeiten ab, nämlich nach 30 Sekunden (Fig. 5a), nach 60 Sekunden (Fig. 5b), nach 120 Sekunden (Fig. 5c) und nach 180 Sekunden (Fig. 5d).

Jeweils ist erkennbar, wie sich eine relative Warmwasserzone 17 in eine relative Kaltwasserzone 18 hineinbewegt (die Wärmeträgerflüssigkeit wurde hier als Wasser modelliert).

Die Ansicht der Fig. 5b wurde außerdem um 90° gedreht, um darzustellen, dass sich auch in einer Ebene senkrecht zur Zeichenebene keine wesentlich anderen Verhältnisse ergeben.

Zu erkennen ist an den Fig. 5a bis 5b die ausgezeichnete thermische Schichtstruktur, die sich in der Pufferkammer 3 einstellt.

Bei Schichtspeichern 1 gemäß dem Stand der Technik traten beispielsweise ausgeprägte Inhomogenitäten dadurch auf, dass der Volumenstrom peripher in die Pufferkammer 3 eingeleitet wurden. Dies kann bei der Erfindung effektiv unterbunden werden, ohne dass der hydraulische Widerstand durch den Schichtspeicher 1 erhöht werden muss.

### L e g e n d e

zu den Hinweisziffern:
- 1: Schichtspeicher
- 2: zumindest eine Anschlusskammer
- 3: zumindest eine Pufferkammer
- 4: zumindest ein erstes Barriereelement
- 5: erste Öffnung
- 6: zumindest ein zweites Barriereelement
- 7: zumindest eine zweite Öffnung
- 8: undurchlässiger Teil
- 9: zumindest teilweise durchlässiger Teil
- 10: Heiz- und/oder Kühlanlage
- 11: Verwirbelungselement
- 12: zumindest ein Anschluss
- 13: Rohrelement
- 14: Wärmepumpe
- 15: Brennwertkessel
- 16: Fußbodenheizung
- 17: Warmwasserzone
- 18: Kaltwasserzone

## Patentansprüche

1. Schichtspeicher für eine Wärmeträgerflüssigkeit für eine Heiz- und/oder Kühlanlage mit
- zumindest einer Anschlusskammer (2), die zumindest einen Anschluss (12) zum Anschließen einer Leitung zum Zu- und/oder Abführen von Wärmeträgerflüssigkeit in den und/oder aus dem Schichtspeicher (1) aufweist,
- zumindest einer Pufferkammer (3), welche unter und/oder über der zumindest einen Anschlusskammer (2) angeordnet ist,
- zumindest einem ersten Barriereelement (4) mit einer ersten, peripher angeordneten Öffnung (5) und
- zumindest einem zweiten Barriereelement (6) mit zumindest einer zweiten Öffnung (7), welches zwischen dem zumindest einen ersten Barriereelement (4) und der zumindest einen Pufferkammer (3) angeordnet ist,
wobei über die erste Öffnung (5)und die zumindest eine zweite Öffnung (7) eine Fluidverbindung zwischen der zumindest einen Anschlusskammer (2) und der zumindest einen Pufferkammer (3) besteht, **dadurch gekennzeichnet, dass** die zumindest eine zweite Öffnung (7) in Bezug auf die Pufferkammer (3) zentral angeordnet ist.

2. Schichtspeicher nach Anspruch 1, **dadurch gekennzeichnet, dass** die erste Öffnung (5) bis an eine Wandung des Schichtspeichers (1) reicht.

3. Schichtspeicher nach einem der vorhergehenden Ansprüche, **dadurch gekennzeichnet, dass** die erste Öffnung in Form eines Kreisringsegments ausgebildet ist.

4. Schichtspeicher nach einem der vorhergehenden Ansprüche, **dadurch gekennzeichnet, dass** die erste Öffnung einen Winkel zwischen 60° und 110°, bevorzugt zwischen 70° und 100° und besonders bevorzugt zwischen 80° und 90°, aufspannt.

5. Schichtspeicher nach einem der vorhergehenden Ansprüche, **dadurch gekennzeichnet, dass** eine Dicke der ersten Öffnung (5) im Wesentlichen einem Abstand zwischen dem zumindest einen ersten Barriereelement (4) und dem zumindest einen zweiten Barriereelement (6) entspricht.

6. Schichtspeicher nach einem der vorhergehenden Ansprüche, **dadurch gekennzeichnet, dass** eine Vielzahl von zweiten Öffnungen (7) vorgesehen sind, die im Zentrum des zumindest einen zweiten Barriereelements (6) angeordnet sind.

7. Schichtspeicher nach einem der vorhergehenden Ansprüche,
**dadurch gekennzeichnet, dass** das zumindest eine zweite Barriereelement (6) einen peripheren undurchlässigen Teil (8) und einen zentralen, zumindest teilweise durchlässigen Teil (9) aufweist, in welchem die zumindest eine zweite Öffnung (7) angeordnet ist.

8. Schichtspeicher nach Anspruch 7, **dadurch gekennzeichnet, dass** ein Verhältnis einer Fläche zwischen dem durchlässigen Teil (8) und dem undurchlässigen Teil (9) zwischen 60 % und 90 %, bevorzugt zwischen 70 % und 85 % und besonders bevorzugt zwischen 75 % und 85 %, beträgt.

9. Schichtspeicher nach einem der Ansprüche 7 oder 8,
**dadurch gekennzeichnet, dass** ein Verhältnis einer Fläche der zumindest einen zweiten Öffnung (7) zu einer Fläche des zumindest teilweise durchlässigen Bereichs (9) zwischen 10 % und 80 %, bevorzugt zwischen 20 % und 60 % und besonders bevorzugt zwischen 30 % und 40 %, liegt.

10. Schichtspeicher nach einem der vorhergehenden Ansprüche, **dadurch gekennzeichnet, dass** der Schichtspeicher (1) und/oder die zumindest eine Anschlusskammer (2) und/oder die zumindest eine Pufferkammer (3) eine im Wesentlichen zylindrische Grundform hat.

11. Schichtspeicher nach einem der vorhergehenden Ansprüche, **dadurch gekennzeichnet, dass** das zumindest eine erste Barriereelement (4) und/oder das zumindest eine zweite Barriereelement (6) eine im Wesentlichen kreisförmige Grundform hat.

12. Schichtspeicher nach einem der vorhergehenden Ansprüche,
**dadurch gekennzeichnet, dass** ein Verwirbelungselement (11), vorzugsweise in Form eines zylindrischen Lochblechs, in der zumindest einen Anschlusskammer (2) im Wesentlichen mittig angeordnet ist.

13. Schichtspeicher nach einem der vorhergehenden Ansprüche,
**dadurch gekennzeichnet, dass** der zumindest eine Anschluss (12) - vorzugsweise alle Anschlüsse (12) - ein Rohrelement (13) aufweist, welches in ein Inneres der zumindest einen Anschlusskammer (2) hineinragt.

14. Schichtspeicher nach Anspruch 13, **dadurch gekennzeichnet, dass** eine Länge des Rohrelements (13) größer ist als eine Dicke der ersten Öffnung (5).

15. Heiz- und/oder Kühlanlage mit einem Schichtspeicher (1) nach einem der vorhergehenden Ansprüche.

## Claims

1. A stratified storage tank for a heat transfer fluid for a heating and/or cooling system, having
- at least one connection chamber (2) which has at least one connection (12) for connection of a line for supplying and/or discharging heat transfer fluid into and/or out of the stratified storage tank (1),
- at least one buffer chamber (3) which is arranged beneath and/or above the at least one connection chamber (2),
- at least one first barrier element (4) having a first, peripherally arranged opening (5), and
- at least one second barrier element (6) which has at least one second opening (7) and is arranged between the at least one first barrier element (4) and the at least one buffer chamber (3),
wherein there is fluidic communication between the at least one connection chamber (2) and the at least one buffer chamber (3) by way of the first opening (5) and the at least one second opening (7), **characterized in that** the at least one second opening (7) is arranged centrally relative to the buffer chamber (3).

2. The stratified storage tank as claimed in claim 1, **characterized in that** the first opening (5) extends as far as a wall of the stratified storage tank (1).

3. The stratified storage tank as claimed in one of the preceding claims, **characterized in that** the first opening is in the form of a circular ring segment.

4. The stratified storage tank as claimed in one of the preceding claims, **characterized in that** the first opening spans an angle of between 60° and 110°, preferably between 70° and 100° and particularly preferably between 80° and 90°.

5. The stratified storage tank as claimed in one of the preceding claims, **characterized in that** a thickness of the first opening (5) corresponds substantially to a distance between the at least one first barrier element (4) and the at least one second barrier element (6).

6. The stratified storage tank as claimed in one of the preceding claims, **characterized in that** there are provided a plurality of second openings (7), which are arranged in the center of the at least one second barrier element (6).

7. The stratified storage tank as claimed in one of the preceding claims, **characterized in that** the at least one second barrier element (6) has a peripheral impenetrable portion (8) and a central, at least partly penetrable portion (9) in which the at least one second opening (7) is arranged.

8. The stratified storage tank as claimed in claim 7, **characterized in that** a ratio of an area between the penetrable portion (8) and the impenetrable portion (9) is between 60% and 90%, preferably between 70% and 85% and particularly preferably between 75% and 85%.

9. The stratified storage tank as claimed in either claim 7 or claim 8, **characterized in that** a ratio of an area of the at least one second opening (7) to an area of the at least partly penetrable region (9) is between 10% and 80%, preferably between 20% and 60% and particularly preferably between 30% and 40%.

10. The stratified storage tank as claimed in one of the preceding claims, **characterized in that** the stratified storage tank (1) and/or the at least one connection chamber (2) and/or the at least one buffer chamber (3) has a substantially cylindrical basic shape.

11. The stratified storage tank as claimed in one of the preceding claims, **characterized in that** the at least one first barrier element (4) and/or the at least one second barrier element (6) has a substantially circular basic shape.

12. The stratified storage tank as claimed in one of the preceding claims, **characterized in that** a turbulizing element (11), preferably in the form of a cylindrical perforated metal sheet, is arranged substantially centrally in the at least one connection chamber (2).

13. The stratified storage tank as claimed in one of the preceding claims, **characterized in that** the at least one connection (12) - preferably all the connections (12) - has/have a pipe element (13) which projects into an interior of the at least one connection chamber (2).

14. The stratified storage tank as claimed in claim 13, **characterized in that** a length of the pipe element (13) is greater than a thickness of the first opening (5).

15. A heating and/or cooling system having a stratified storage tank (1) as claimed in one of the preceding claims.

## Revendications

1. Accumulateur à couches pour un liquide caloporteur pour une installation de chauffage et/ou de refroidissement, avec
- au moins une chambre de raccordement (2) qui est munie d'au moins un raccord (12) pour le raccordement d'une conduite pour l'amenée et/ou l'évacuation d'un liquide caloporteur dans et/ou hors de l'accumulateur à couches (1),
- au moins une chambre tampon (3) qui est disposée au-dessous et/ou au-dessus de ladite au moins une chambre de raccordement (2),
- au moins un premier élément barrière (4) avec une première ouverture (5) disposée de manière périphérique, et
- au moins un deuxième élément barrière (6) avec au moins une deuxième ouverture (7), lequel est disposé entre ledit au moins un premier élément barrière (4) et ladite au moins une chambre tampon (3),
une communication fluidique entre ladite au moins une chambre de raccordement (2) et ladite au moins une chambre tampon (3) étant réalisée par l'intermédiaire de ladite première ouverture (5) et de ladite au moins une deuxième ouverture (7), **caractérisé en ce que** ladite au moins une deuxième ouverture (7) est disposée de manière centrale par rapport à la chambre tampon (3).

2. Accumulateur à couches selon la revendication 1, **caractérisé en ce que** la première ouverture (5) s'étend jusqu'à une paroi de l'accumulateur à couches (1).

3. Accumulateur à couches selon l'une des revendications précédentes, **caractérisé en ce que** la première ouverture est réalisée sous la forme d'un segment d'anneau circulaire.

4. Accumulateur à couches selon l'une des revendications précédentes, **caractérisé en ce que** la première ouverture forme un angle compris entre 60° et 110°, de préférence entre 70° et 100°, et de manière particulièrement préférée entre 80° et 90°.

5. Accumulateur à couches selon l'une des revendications précédentes, **caractérisé en ce qu'**une épaisseur de la première ouverture (5) correspond sensiblement à une distance entre ledit au moins un premier élément barrière (4) et ledit au moins un deuxième élément barrière (6).

6. Accumulateur à couches selon l'une des revendications précédentes, **caractérisé en ce qu'**une pluralité de deuxièmes ouvertures (7) sont prévues, lesquelles sont disposées au centre dudit au moins un deuxième élément barrière (6).

7. Accumulateur à couches selon l'une des revendications précédentes, **caractérisé en ce que** ledit au moins un deuxième élément barrière (6) est muni d'une partie périphérique imperméable (8) et d'une partie centrale au moins partiellement perméable (9) dans laquelle est disposée ladite au moins une deuxième ouverture (7).

8. Accumulateur à couches selon la revendication 7, **caractérisé en ce qu'**un rapport d'une surface entre la partie perméable (8) et la partie imperméable (9) est compris entre 60 % et 90 %, de préférence entre 70 % et 85 % et de manière particulièrement préférée entre 75 % et 85 %.

9. Accumulateur à couches selon l'une des revendications 7 ou 8, **caractérisé en ce qu'**un rapport entre une surface de ladite au moins une deuxième ouverture (7) et une surface de ladite partie au moins partiellement perméable (9) est compris entre 10 % et 80 %, de préférence entre 20 % et 60 % et de manière particulièrement préférée entre 30 % et 40 %.

10. Accumulateur à couches selon l'une des revendications précédentes, **caractérisé en ce que** l'accumulateur à couches (1) et/ou ladite au moins une chambre de raccordement (2) et/ou ladite au moins une chambre tampon (3) a une forme de base essentiellement cylindrique.

11. Accumulateur à couches selon l'une des revendications précédentes, **caractérisé en ce que** ledit au moins un premier élément barrière (4) et/ou ledit au moins un deuxième élément barrière (6) a une forme de base essentiellement circulaire.

12. Accumulateur à couches selon l'une des revendications précédentes, **caractérisé en ce qu'**un élément de tourbillonnement (11), de préférence sous la forme d'une tôle perforée cylindrique, est disposé sensiblement au centre de ladite au moins une chambre de raccordement (2).

13. Accumulateur à couches selon l'une des revendications précédentes, **caractérisé en ce que** ledit au moins un raccord (12) - de préférence tous les raccords (12) - est muni d'un élément tubulaire (13) qui pénètre à l'intérieur de ladite au moins une chambre de raccordement (2).

14. Accumulateur à couches selon la revendication 13, **caractérisé en ce qu'**une longueur de l'élément tubulaire (13) est supérieure à une épaisseur de la première ouverture (5).

15. Installation de chauffage et/ou de refroidissement comprenant un accumulateur à couches (1) selon l'une des revendications précédentes.
